# FASCICULE DE BREVET EUROPEEN

(11) **EP 3 302 767 B1**
(45) Date de publication et mention de la délivrance du brevet: **08.05.2019**
(21) Numéro de dépôt: 16731226.3
(22) Date de dépôt: 25.05.2016
(51) Int. Cl.: B01D 63/06, B01D 67/00, B28B 1/00, C04B 38/00

(54) **STRUCTURE COLONNAIRE MONOBLOC DE SÉPARATION D'UN MILIEU FLUIDE**
EINSTÜCKIGE SÄULENSTRUKTUR ZUR TRENNUNG EINES FLÜSSIGMEDIUMS
SINGLE-PIECE COLUMN STRUCTURE FOR THE SEPARATION OF A FLUID MEDIUM

(30) Priorité: 29.05.2015 FR 1554913
(43) Date de publication de la demande: 11.04.2018
(73) Titulaire: Technologies Avancees et Membranes Industrielles, 26110 Nyons (FR)
(72) Inventeur: LESCOCHE, Philippe, 26110 Piegon (FR); ANQUETIL, Jérôme, 84110 Vaison La Romaine (FR)
(74) Mandataire: Cabinet Beau de Loménie
(86) Numéro de dépôt international: PCT/FR2016/051234
(87) Numéro de publication internationale: WO 2016/193574

(56) Documents cités:
- EP-A1- 2 832 708
- WO-A1-02/053270
- FR-A1- 2 786 109
- FR-A1- 3 006 606
- US-A- 3 977 967
- US-A1- 2004 076 874

## Description

La présente invention concerne le domaine technique des éléments de séparation par flux tangentiel d'un milieu fluide à traiter en un filtrat et un rétentat, communément appelés membranes de filtration.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière sélective et permet, sous l'action d'une force de transfert, le passage ou l'arrêt de certains composants du milieu à traiter. Le passage ou l'arrêt des composants résulte de leur taille par rapport à la taille des pores de la membrane qui se comporte alors comme un filtre. En fonction de la taille des pores, ces techniques sont nommées microfiltration, ultrafiltration ou nanofiltration.

Il existe des membranes de natures, structures et textures différentes. Par exemple, les membranes céramiques. Elles sont, en général, constituées d'un support poreux qui assure la résistance mécanique de la membrane et donne également la forme et donc détermine la surface filtrante de la membrane. Sur ce support, une ou plusieurs couches de quelques microns d'épaisseur assurant la séparation et dites couches séparatrices, couches de filtration, couches de séparation ou couches actives, sont déposées. Durant la séparation, le transfert du fluide filtré s'effectue à travers la couche séparatrice, puis ce fluide se répand dans la texture poreuse du support pour se diriger vers la paroi extérieure du support poreux. Cette partie du fluide à traiter ayant traversé la couche de séparation et le support poreux est appelée perméat ou filtrat et se trouve récupérée par une chambre de collecte ou espace périphérique entourant la membrane et délimité par un carter et des plaques de support des membranes. L'autre partie est appelée rétentat et est, le plus souvent, réinjectée dans le fluide à traiter en amont de la membrane, grâce à une boucle de circulation.

De manière classique, le support est d'abord fabriqué selon la forme souhaitée par extrusion, puis fritté à une température et pendant un temps suffisant pour assurer la solidité requise, tout en conservant dans la céramique obtenue la texture poreuse ouverte et interconnectée voulue. Ce procédé contraint à l'obtention d'un ou plusieurs canaux rectilignes à l'intérieur desquels sont ensuite déposées et frittées la ou les couches séparatrices. Les supports sont traditionnellement de forme tubulaire et comportent un ou plusieurs canaux rectilignes aménagés parallèlement à l'axe central du support.

De manière générale, comme cela est décrit par exemple dans la demande de brevet FR 2 786 109 de telles membranes sont mises en oeuvre dans un carter pour former un module de filtration qui est donc constitué d'une enveloppe métallique, le plus souvent cylindrique, qui est équipée à ses extrémités d'une plaque support dans laquelle sont aménagés des trous pour recevoir les extrémités des éléments de filtration. Ainsi, pour former un module de filtration, les éléments de filtration sont positionnés à l'intérieur du carter en s'étendant parallèlement les uns aux autres. Les éléments de filtration sont montés de manière étanche à chacune de leurs extrémités, sur la plaque de support, à l'aide de joints d'étanchéité.

Par carter, on entend plus précisément l'ensemble formé par une virole, qui est une enveloppe métallique généralement cylindrique, équipée à chacune de ses extrémités d'une plaque, plus précisément appelée plaque de tête, dans laquelle sont aménagés des trous pour recevoir et positionner les extrémités des éléments de filtration en parallèle dans la virole.

L'étanchéité entre les éléments de filtration et la plaque de tête est obtenue avec un joint unique ou plusieurs joints individuels. Les modules industriels de l'art antérieur comprennent en effet deux types de joints, à savoir le joint unique et le joint individuel.

Le joint unique consiste à réaliser l'étanchéité de l'ensemble des éléments de séparation présents dans un carter à partir d'une pièce unique perforée d'autant de passages que d'éléments de séparation. Ces derniers sont disposés en parallèle à l'intérieur du carter et leur positionnement est obtenu à partir de la plaque de tête qui comprend un nombre de passages égal au nombre d'éléments de filtration. Ces derniers dépassent légèrement de la plaque de tête, d'une distance de l'ordre de grandeur de l'épaisseur du joint. En dessus du joint, une contreplaque est disposée dans le but de comprimer ce dernier par l'intermédiaire d'écrous de serrage. Cette contreplaque possède des passages dont les axes sont confondus avec ceux de la plaque de tête. Le diamètre de ces passages est légèrement inférieur au diamètre extérieur de l'élément de filtration. Les principaux paramètres qui participent à la conception de ce joint sont son épaisseur, définie par la partie de l'élément de filtration qui pénètre à l'intérieur du joint ainsi que sa dureté qui, définie à partir de la dureté Shore, participe à l'écrasement du joint durant la phase de serrage de la contreplaque. L'association de la dureté et de l'épaisseur permet de définir un écrasement dont va dépendre l'étanchéité.

Le joint individuel est placé autour de chaque élément de filtration. Il se compose d'une jupe qui entoure une partie des extrémités de ces derniers. La partie extérieure de cette jupe peut être cylindrique ou conique. Cette jupe se prolonge par une partie supérieure qui recouvre en partie l'extrémité de l'élément de filtration. Cette partie est disposée à la périphérie de l'extrémité de l'élément de séparation et son diamètre interne est déterminé pour ne pas obturer les canaux de circulation. Comme précédemment, le carter comporte une plaque de tête comportant autant de passages que d'éléments de filtration. La forme et les dimensions de ces passages sont déterminées pour recevoir la jupe du joint (cylindre ou cône), évitant ainsi tout contact entre l'élément de filtration et le métal de la plaque de tête. Quant à la partie supérieure du joint elle vient se loger dans des lamages réalisés dans la contreplaque, la profondeur de ces lamages étant inférieure à la partie supérieure du joint. Trois paramètres principaux participent à la réalisation de ces joints individuels: la forme de la jupe, la hauteur de la partie supérieure et la dureté Shore du joint. L'association de ces trois paramètres permet de définir d'une part un écrasement dont va dépendre l'étanchéité et d'autre part la protection de la partie de l'élément de filtration qui traverse la plaque de tête.

Quel que soit le type de joint, unique ou individuel, leurs réalisations s'effectuent par des opérations de plasturgie qui nécessitent la fabrication de moules d'injection coûteux dont l'amortissement participe de manière importante dans le prix de revient du joint.

Le volume intérieur d'un élément de séparation étant défini et limité de par ses dimensions extérieures et l'aire de la surface filtrante étant proportionnelle au nombre de canaux, il a été constaté que l'aire des surfaces filtrantes des membranes de filtration se heurtent à un plafond et présentent, de ce fait, des performances limitées en termes de débit.

Sont historiquement et chronologiquement apparues sur le marché des éléments de séparation tubulaires cylindriques monocanal, puis des éléments de séparation tubulaires multicanaux.

Les premiers éléments de séparation multicanaux, dont l'un des intérêts, outre l'augmentation de l'aire totale de la surface filtrante, réside dans l'obtention de canaux de petits diamètres hydraulique sans risques de fragilité pour l'élément de séparation, comportaient exclusivement des canaux de sections droites circulaires.

La génération suivante abandonna les canaux circulaires afin de mieux occuper le volume interne du tube et augmenter sa surface filtrante ce qui eut pour conséquence d'augmenter la compacité exprimée en m²/m³ dans les carters et aussi d'accroître les possibilités de turbulences, cette compacité, exprimée en m²/m³, correspondant au rapport de la somme des surfaces filtrantes des éléments de filtration divisée par le volume interne du carter dans lequel ils sont installés.

Il est connu que la compacité des carters dans lesquels sont installés des éléments de séparation monocanaux ou multicanaux est limitée, pour un carter de diamètre intérieur donné et pour des éléments de séparation possédant une surface filtrante donnée, par la distance **D** entre chacun de ces éléments de séparation, laquelle distance est dépendante de l'épaisseur des joints utilisés et des impératifs de résistance mécanique des plaques de tête.

Par ailleurs, quel que soit le type de joint, unique ou individuel, la jupe qui recouvre la partie extérieure de l'élément de filtration et réalise l'étanchéité entre le métal et l'élément de filtration se prolonge par une plaque commune dans le cas du joint unique ou par une plaque individuelle dans le cas du joint individuel. L'épaisseur de cette jupe ainsi que la toile entre deux passages définissent cette distance **D** dont dépend directement le nombre d'éléments de filtration à l'intérieur du carter. Cette toile est définie pour permettre la résistance mécanique du carter comme par exemple une résistance à une pression intérieure de 10 bars.

A titre d'exemple, le tableau ci-dessous donne le nombre d'éléments de séparation et le nombre de joints individuels pour trois carters industriels.

| | Configuration industrielle de l'art antérieur | | |
|---|---|---|---|
| Diamètre intérieur du carter | DN100 | DN200 | DN350 |
| | 110mm | 213mm | 349mm |
| Nombre d'éléments de filtration dans le carter | 7 | 37 | 99 |
| Nombre de joints spécifiques individuels | 14 | 74 | 198 |

Il est également connu par la demande de brevet US 2004/0076874, un module de séparation comportant une série de colonnes poreuses supportées à l'une de leurs extrémités par une plaque d'entrée et à l'autre de leurs extrémités par une plaque de sortie. Ces colonnes poreuses sont fixées aux plaques d'entrée et de sortie par exemple par frittage. Un des inconvénients d'un tel module concerne la difficulté de réaliser cet assemblage dans les cas où les valeurs du diamètre extérieur ainsi que celle de l'épaisseur des colonnes poreuses sont très faibles. En effet, l'absence de résilience des céramiques associée aux faibles dimensions des colonnes rendent ces dernières très fragiles, ce qui limite considérablement au niveau industriel la réalisation de module de séparation comportant un grand nombre de ces colonnes. Toujours dans ces conditions de faible diamètre externe et de faible épaisseur, un autre inconvénient apparaît dans la difficulté de maîtriser la distance inter-colonne quand la valeur de cette dernière est très faible. A titre d'exemple, il est inenvisageable de réaliser un module de séparation comportant quelques centaines de colonnes poreuses de Dh =1,6 mm, d'épaisseur = 0,9 mm et de distance inter-colonne de 0,5 mm sans qu'une seule de ces colonnes ne subissent une casse rendant ainsi le module de séparation inopérant.

Une solution consiste à réaliser des assemblages ou le nombre se limite à quelques dizaines mais il faut ensuite assembler entre eux ces mini modules pour obtenir un module de séparation de surface filtrante équivalente. Or l'assemblage de ces mini modules engendre une perte de volume importante en raison de l'espace entre ces mini modules, ce qui réduit la compacité de l'ensemble.

La présente invention vise à remédier aux inconvénients de l'art antérieur en proposant un nouvel élément monobloc de séparation pour obtenir une séparation moléculaire et/ou particulaire par flux tangentiel d'un milieu fluide, et conçu pour améliorer la compacité c'est-à-dire le rapport de la surface filtrante sur le volume total interne du carter, (rapport exprimé en m²/m³), ce nouvel élément permettant de surcroît de simplifier les modules en réduisant le nombre des joints nécessaires et en supprimant l'obligation des plaques de tête.

Avec un tel élément monobloc conforme à l'invention, la compacité, exprimée en m²/m³ dans les carters, est augmentée, à diamètre hydraulique égal, d'un facteur au moins égal à 1,2 et de préférence supérieur à 1,5 par rapport à l'art antérieur et à l'utilisation d'éléments de séparation monocanaux et multicanaux connus.

Pour atteindre de telles compacités, l'invention concerne un élément monobloc de séparation pour obtenir une séparation moléculaire et/ou particulaire d'un milieu fluide à traiter en un filtrat et un rétentat, ce élément comportant une structure d'au moins deux colonnes rigides poreuses réalisées en un même matériau, positionnées l'une à côté de l'autre pour délimiter à l'extérieur de leurs parois extérieures, un volume de récupération du filtrat, chaque colonne comportant intérieurement au moins une structure ouverte pour la circulation du milieu fluide, débouchant à l'une des extrémités de cette colonne poreuse pour l'entrée du milieu fluide à traiter et à l'autre extrémité pour la sortie du rétentat, caractérisée en ce que lesdites colonnes poreuses sont solidarisées entre elles à l'une et à l'autre de leurs extrémités à l'aide d'une plaque d'entrée et d'une plaque de sortie, lesdites plaques n'étant pas rapportées sur les colonnes poreuses en vue de former ensemble ladite structure monobloc.

Ainsi, l'objet de l'invention étant de proposer un module de séparation mettant en oeuvre un élément monobloc de séparation conforme à l'invention en optimisant la distance entre les colonnes poreuses et l'épaisseur de matériau des colonnes poreuses, il peut être obtenu une compacité accrue exprimée en m²/m³, à diamètre hydraulique égal, par rapport aux éléments de séparation monocanaux et multicanaux connus.

L'élément monobloc de séparation selon l'invention comporte également en combinaison l'une et/ou l'autre des caractéristiques additionnelles suivantes :
- les colonnes rigides poreuses possèdent des formes extérieures qui sont constantes ou variables suivant leur longueur ;
- les colonnes rigides poreuses possèdent des dimensions transversales qui sont constantes ou variables suivant leur longueur ;
- les plaques sont réalisées avec le même matériau que les colonnes poreuses, pour une identité et une continuité de matériau et de texture poreuse entre les plaques et les colonnes ;
- chaque plaque comporte une face externe étanche en contact avec le milieu fluide à traiter ou avec le rétentat ;
- les plaques (possèdent une section droite circulaire) ;
- les plaques (possèdent une section droite non circulaire) ;
- les colonnes poreuses sont solidarisées entre elles à l'aide d'au moins un pont de liaison, réalisé avec le même matériau que les plaques et les colonnes ;
- les colonnes poreuses sont de formes différentes ou identiques ;
- les colonnes poreuses possèdent des dimensions transversales identiques ou différentes ;
- les colonnes poreuses sont de forme cylindrique ;
- les colonnes poreuses sont de forme hélicoïdale ;
- les colonnes poreuses sont entrecroisées ;
- les colonnes poreuses possèdent intérieurement des structures ouvertes pour la circulation du milieu fluide, identiques pour l'ensemble des colonnes poreuses ou différentes pour au moins une des colonnes poreuses ;
- chaque colonne poreuse comporte en tant que structure ouverte, un unique canal ;
- les canaux des colonnes poreuses délimitent pour chaque colonne poreuse, une épaisseur constante de matériau poreux compris entre 0,25 et 5mm tandis que la distance entre les colonnes poreuses est comprise entre 0,125 et 10mm ;
- chaque colonne poreuse comporte en tant que structure ouverte, des canaux comportant tous une paroi périphérique en regard de la paroi extérieure de la colonne poreuse ;
- au moins une couche séparatrice pour le milieu fluide est continûment déposée sur la surface de la structure ouverte en contact avec le milieu fluide ;
- les colonnes poreuses et les plaques sont réalisées en un matériau organique ;
- les colonnes poreuses et les plaques sont constituées d'une céramique choisie parmi les oxydes, les nitrures, les carbures ou d'autres matériaux céramiques et leur mélanges, et, en particulier, parmi l'oxyde de titane, l'alumine, la zircone et leur mélange, le nitrure de titane, le nitrure d'aluminium, le nitrure de bore, et le carbure de silicium éventuellement en mélange avec un autre matériau céramique ;
- les colonnes poreuses et les plaques sont réalisées en un matériau inorganique non métallique ;
- les colonnes poreuses et les plaques sont réalisées en un métal pur tel que l'aluminium, le zinc, le cuivre, le titane ou sous forme d'un alliage de plusieurs de ces métaux ou d'acier inoxydable.

Un autre objet de l'invention est de proposer un module de séparation pour obtenir une séparation moléculaire et/ou particulaire d'un milieu fluide à traiter en un filtrat et un rétentat, le dispositif comportant dans un carter, au moins un élément monobloc conforme à l'invention dont chaque plaque est montée dans un joint d'étanchéité.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'un premier mode de réalisation d'un élément de séparation conforme à l'invention.
Les **Figures 1A** et **1B** sont des vues en coupe transversale prises respectivement selon les lignes **A-A** et **B-B** de l'élément de séparation illustré à la **Fig. 1****.**
La **Figure 2** est une vue en perspective d'un autre exemple de réalisation d'un élément de séparation conforme à l'invention dont les colonnes poreuses sont entrecroisées.
La **Figure 3** est une vue en coupe élévation montrant le principe de montage d'un élément de séparation conforme à l'invention tel que celui représenté à la **Fig. 1** à l'intérieur d'un carter.
La **Figure 3A** est une vue en coupe transversale prise suivant la ligne **A-A** de la **Fig. 3****.**
La **Figure 4** est une vue en perspective d'un autre exemple de réalisation d'un élément de séparation conforme à l'invention dans lequel chaque colonne poreuse est pourvue de sept canaux.
Les **Figures 4A** et **4B** sont des vues en coupe transversale prises respectivement selon les lignes **A-A** et **B-B** de l'élément de séparation illustré à la **Fig. 4****.**
Les **Figures 5A** à **5F** sont des graphes donnant les compacités (en ordonnée et en m²/m³) obtenues avec les éléments de séparation conformes à l'invention montés dans un carter DN 200, en fonction de la distance **d** (en abscisse et en mm) entre les colonnes poreuses dont chacune comporte un seul canal de diamètre hydraulique **Dh,** pour deux valeurs de l'épaisseurs e (e=0,8mm et e=1mm), le diamètre hydraulique étant égal respectivement à 6mm, 6mm, 4,6mm, 3,5mm, 2,3mm et 1,6mm.
Les **Figures 6A** à **6C** illustrent les compacités (en ordonnée et en m²/m³) obtenues avec les éléments de séparation conformes à l'invention montés dans un carter DN 200 en fonction de la distance **d** (en abscisse et en mm) entre les colonnes poreuses pourvues d'un seul canal ou de plusieurs canaux en comparaison avec une configuration industrielle de l'art antérieur de diamètre hydraulique équivalent prise comme référence (ligne horizontale), le diamètre hydraulique étant égal respectivement à 3,47mm, 2,3mm et 1,6mm.
Les **Figures 7A** à **7E** illustrent les compacités (en ordonnée et en m²/m³) obtenues pour des éléments de séparation conformes à l'invention montées dans des carters DN100 et DN350, en fonction de la distance **d** (en abscisse et en mm) entre les colonnes poreuses pourvues respectivement d'un canal, 7, 23, 39 et 93 canaux et respectivement pour un diamètre hydraulique égal à 6mm, 6mm, 3,5mm, 2,5mm et 1,6mm.

En préliminaire, quelques définitions des termes utilisés dans le cadre de l'invention vont être données.

Par diamètre moyen de pores, on entend la valeur d50 d'une distribution volumique pour laquelle 50% du volume total des pores correspondent au volume des pores de diamètre inférieur à ce d50.La distribution volumique est la courbe (fonction analytique) représentant les fréquences des volumes des pores en fonction de leur diamètre. Le d50 correspond à la médiane séparant en deux parties égales, l'aire située sous la courbe des fréquences obtenue par pénétration de mercure, pour des diamètres moyens de pores supérieurs ou égaux à 4 nm ou par adsorption de gaz, et notamment de N₂, lorsque les diamètres moyens de pores sont inférieurs à 4 nm, ces deux techniques étant retenues comme références dans le cadre de l'invention pour la mesure du diamètre moyen des pores.

En particulier, on pourra utiliser les techniques décrites dans :
- la norme ISO 15901-1 :2005, pour ce qui concerne la technique de mesure par pénétration de mercure ;
- les normes ISO 15901-2 :2006 et ISO 15901-3 :2007, pour ce qui concerne la technique de mesure par adsorption de gaz.

L'objet de l'invention vise les éléments de séparation pour obtenir une séparation moléculaire et/ou particulaire d'un milieu fluide par filtration tangentielle, communément appelés membranes de filtration. D'une manière générale et comme illustré sur les figures, un tel élément de séparation **1** comporte une structure rigide **2** monolithique ou monobloc.

Dans le cadre de l'invention, une structure monobloc est définie comme étant faite d'une seule pièce, homogène et continue dans tout son ensemble, sans soudure ni apports exogènes. En d'autres termes, aucune partie constitutive de cette structure monobloc n'est rapportée c'est-à-dire que cette structure monobloc est fabriquée en une seule opération de sorte que cette structure monobloc est directement utilisable pour le dépôt des couches séparatrices ou nécessite au plus un traitement thermique.

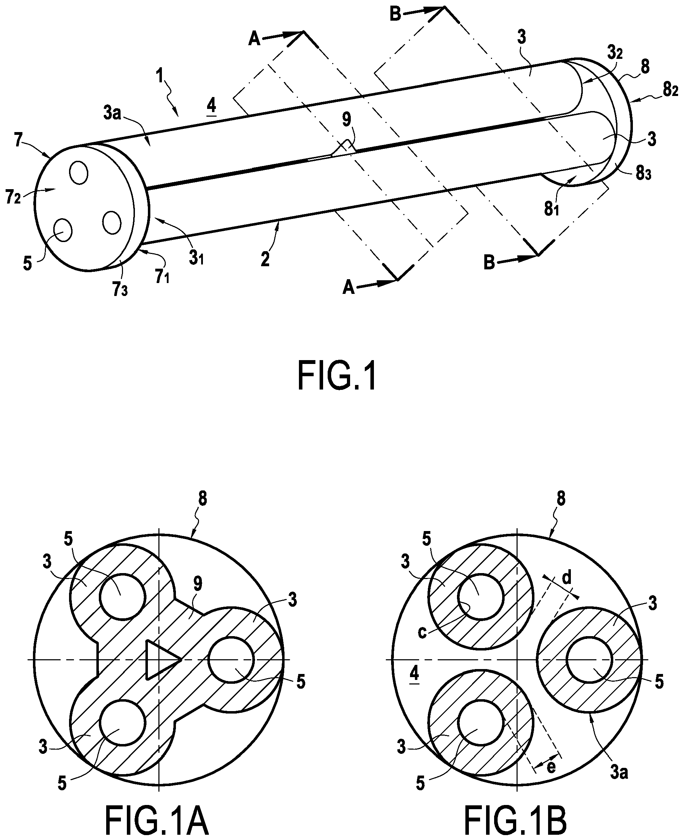

Conformément à l'invention, la structure monobloc **2** comporte au moins deux et dans l'exemple illustré à la **Fig. 1****,** trois colonnes rigides poreuses **3** réalisées en un même matériau poreux, positionnées l'une à côté de l'autre pour délimiter à l'extérieur de leurs parois extérieures, un espace périphérique **4** de récupération du filtrat. Chaque colonne poreuse **3** forme un support poreux rigide présentant une forme générale allongée s'étendant d'une première extrémité **3₁** à une deuxième extrémité **3₂** opposée à la première extrémité.

Chaque colonne poreuse **3** comporte intérieurement au moins une structure ouverte **5** pour la circulation du milieu fluide à traiter, débouchant à la première extrémité **3₁** de cette colonne poreuse pour l'entrée du milieu fluide à traiter et à la deuxième extrémité **3₂** de cette colonne poreuse pour la sortie du rétentat. Cette structure ouverte **5** qui dans l'exemple illustré se présente sous la forme d'un canal, correspond à un espace vide pour la circulation du milieu fluide c'est-à-dire à une zone de la colonne poreuse **3** ne comportant pas de matière poreuse.

La partie de chaque colonne poreuse **3** délimitant la structure ouverte ou canal **5** présente une surface recouverte par au moins une couche séparatrice **C,** destinée à être en contact avec le milieu fluide à traiter, circulant à l'intérieur de la structure ouverte **5.** Une partie du milieu fluide traverse la couche séparatrice **C** et le matériau poreux des colonnes poreuses **3,** de sorte que cette partie traitée du fluide, appelée filtrat ou perméat, s'écoule par la paroi extérieure **3a** de chaque colonne poreuse. Le filtrat est récupéré dans l'espace périphérique **4** de la structure poreuse par tous moyens appropriés. Chaque colonne poreuse **3** possède ainsi une paroi périphérique d'épaisseur **e** entre la structure ouverte **5** et la paroi extérieure **3a.**

Conformément à l'invention, les colonnes poreuses **3** sont solidarisées entre elles au moins à leurs premières extrémités voisines, à l'aide d'une plaque d'entrée **7** et à leurs deuxièmes extrémités voisines, à l'aide d'une plaque de sortie **8.** Chaque plaque **7, 8** assure une liaison mécanique d'assemblage entre les colonnes poreuses **3** avec la plaque d'entrée **7** assurant la liaison des colonnes rigides poreuses **3** au niveau de leurs premières extrémités **3₁** et avec la plaque de sortie **8** assurant la liaison des colonnes rigides poreuses au niveau de leurs deuxièmes extrémités **3₂**. Conformément à l'invention, les plaques **7, 8** ne sont pas rapportées sur les colonnes poreuses en vue de former ensemble ladite structure monobloc. En effet, les colonnes poreuses **3** et les plaques **7, 8** sont fabriquées en une seule opération de sorte que la structure monobloc **2** ainsi obtenu soit directement utilisable pour le dépôt des couches de séparation **C** pour le milieu fluide à traiter ou nécessite au plus un traitement thermique.

Chaque plaque **7, 8** possède une face dite interne respectivement **7₁, 8₁** tournée vers et en contact avec l'espace périphérique **4** de la structure poreuse et une face dite externe respectivement **7₂,** tournée vers et en contact avec le milieu fluide à traiter et **8₂** tournée vers et en contact avec le rétentat. Les plaques d'entrée et de sortie **7, 8** qui possèdent un pourtour respectivement **7₃, 8₃** d'épaisseur variable en fonction de la résistance mécanique souhaitée, présentent une section droite adaptée pour permettre son montage dans un carter comme cela sera mieux compris dans la suite de la description. Dans l'exemple illustré sur les dessins, les plaques **7, 8** possèdent une section droite circulaire mais il est clair que la section droite de ces plaques peut-être différente c'est-à-dire non circulaire.

Conformément à une caractéristique de l'invention, les colonnes poreuses **3** sont solidarisées entre elles aussi à l'aide d'au moins un pont de liaison **9** permettant de rigidifier les colonnes poreuses **3** entre elles tout en permettant de conserver un écart constant entre les colonnes poreuses **3.** Ainsi, les colonnes poreuses **3** sont écartées entre elles d'une distance **d.** Ces ponts de liaison **9** sont réalisés localement selon toutes formes appropriées, en étant distribués de préférence régulièrement entre les plaques. Ces ponts de liaison **9** sont réalisés avec le même matériau que les colonnes poreuses.

Les colonnes poreuses **3** et les plaques d'entrée **7** et de sortie **8** et les ponts de liaison **9** forment une structure monobloc. De telles structures monoblocs **2** qui ne peuvent pas être réalisées par les techniques traditionnelles d'extrusion peuvent être réalisées de préférence par des techniques additives comme celles décrites par exemple par la demande de brevet FR 3 006 606. Selon une méthode additive de fabrication, il est considéré que les plaques et les colonnes sont dites non rapportées si la fabrication permet la mise en forme des plaques **7, 8** et des colonnes poreuses **3,** de manière à ce que la structure monobloc **2** ainsi formée soit directement utilisable pour le dépôt des couches ou nécessite au plus un traitement thermique. Selon une méthode additive de fabrication, la structure monobloc dans son entier étant construite par superposition de strates élémentaires liées entre elles par projection d'un liquide en fines gouttelettes ou par un apport d'énergie, un premier traitement thermique de consolidation est en effet indispensable dans le premier cas ; l'interaction énergie-matière étant normalement suffisante pour conduire soit à un frittage, soit à une fusion/solidification de la matière dans le second cas.

Ce traitement thermique est particulièrement indispensable quand l'apport localisé de liquide est fait avec des microgouttelettes créées à l'aide d'un élément piézo-électrique, éventuellement chargées et dirigées dans un champ électrostatique ; le liquide étant un liant ou un agent activateur du liant préalablement ajouté à la poudre céramique.

De telles structures monoblocs **2** peuvent être réalisées aussi par exemple par la technique de coulage qui nécessite une opération de réalisation du moule, de préparation de la suspension de coulage, de coulage proprement dit, de séchage, de démoulage et de traitement thermique pour obtenir la porosité et la solidité de la structure monobloc.

Pour de telles structures monoblocs **2,** les colonnes poreuses **3** présentent une texture poreuse continue sur la totalité du volume de la colonne poreuse. Cette texture poreuse est caractérisée par le diamètre moyen des pores déduit de leur distribution mesurée par porométrie par pénétration de mercure.

La texture poreuse des colonnes poreuses **3** est ouverte et forme un réseau de pores interconnectés, ce qui permet au fluide filtré par la couche séparatrice de filtration, de traverser la structure poreuse et d'être récupéré par l'espace périphérique **4** de la structure poreuse. Il est d'usage de mesurer la perméabilité à l'eau de la structure poreuse pour qualifier la résistance hydraulique de la structure, ce qui permet dans le même temps de confirmer l'interconnexion de la texture poreuse. En effet, dans un milieu poreux, l'écoulement stationnaire d'un fluide visqueux incompressible est régi par la loi de Darcy. La vitesse du fluide est proportionnelle au gradient de la pression et inversement proportionnelle à la viscosité dynamique du fluide, via un paramètre caractéristique appelé perméabilité qui peut être mesurée, par exemple, selon la norme française NF X 45-101 de Décembre 1996.

Le plus souvent, les colonnes poreuses **3** sont réalisées en un matériau inorganique non métallique. De préférence, les colonnes poreuses **3** sont constituées d'une céramique, choisie parmi les oxydes, les nitrures, les carbures ou d'autres matériaux céramiques et leur mélanges, et, en particulier, parmi l'oxyde de titane, l'alumine, la zircone et leur mélange, le nitrure de titane, le nitrure d'aluminium, le nitrure de bore, et le carbure de silicium éventuellement en mélange avec un autre matériau céramique.

Il est à noter que la structure poreuse peut être réalisée aussi en un matériau organique ou inorganique purement métallique. Par exemple, les colonnes poreuses **3** sont réalisées en un métal pur comme, l'aluminium, le zinc, le cuivre, le titane ou sous forme d'un alliage de plusieurs de ces métaux ou d'aciers inoxydables.

Par exemple, le matériau constitutif des colonnes poreuses **3** présente un diamètre moyen de pores appartenant à la gamme allant de 1 µm à 100 µm.

Les colonnes poreuses **3** et les plaques **7, 8** sont réalisées avec le même matériau pour une identité et une continuité de matériau et de texture poreuse entre les plaques et les colonnes poreuses **3.** La porosité du matériau constitutif des colonnes poreuses **3** et des plaques **7, 8** est identique.

Selon une caractéristique avantageuse de réalisation de l'invention, chaque plaque **7, 8** est réalisée sous la forme d'un élément plein pour former une plaque pleine dont la section englobe toute les sections des colonnes poreuses **3.** Les plaques **7, 8** ferment ainsi l'espace périphérique **4** de la structure poreuse, pour confiner ainsi le filtrat. Chaque plaque **7, 8** comporte une face externe **7₂, 8₂** en contact respectivement avec le milieu fluide à traiter et le rétentat, ces faces externes **7₂, 8₂** étant étanches pour éviter que le milieu fluide à traiter et le rétentat pénètrent dans les plaques. L'étanchéité des faces externes **7₂, 8₂** des plaques **7, 8** peut être réalisé de toute manière appropriée. Par exemple, les faces externes **7₂, 8₂** des plaques **7, 8** sont rendues étanche par densification jusqu'à une valeur égale ou très proche de la densité intrinsèque du matériau ou par imprégnation ou dépôt d'un matériau rapporté autre que celui de la plaque.

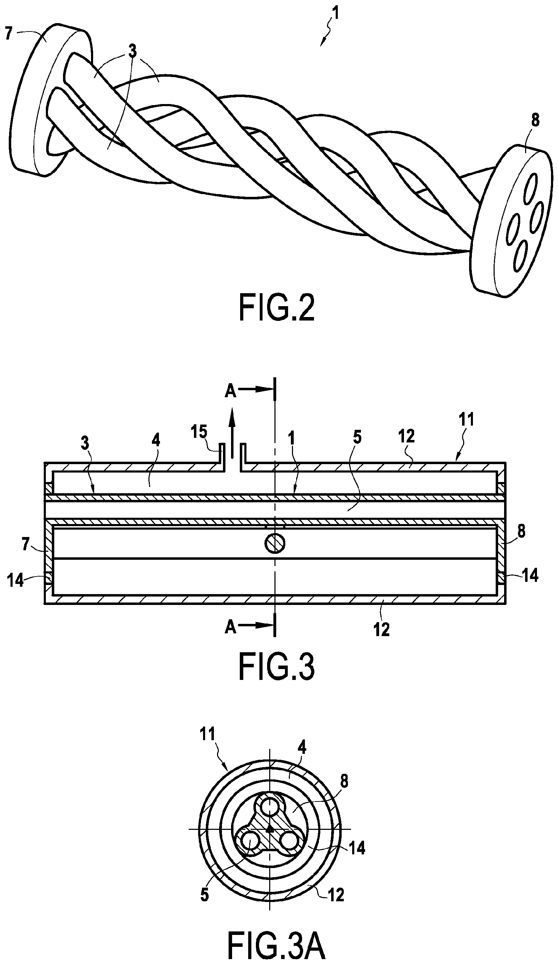

Ainsi, tel que cela ressort plus précisément des **Fig. 3** et **3A****,** l'élément de séparation **1** conforme à l'invention est destiné à être mis en oeuvre dans un module de séparation **11** de tous types connus en soi. De manière classique, le module de séparation **11** comporte un carter **12** de forme tubulaire dans lequel un ou plusieurs éléments **1** de séparation sont montés.

A cet effet, le module de séparation **11** est monté de manière que les plaques d'entrée **7** et de sortie **8** se trouvent positionnées au niveau des extrémités du carter **12.** Ces plaques d'entrée **7** et de sortie **8** sont montées de manière étanche sur le carter **12** à l'aide de joints d'étanchéité **14.** Ces joints d'étanchéité **14** sont montés de toute manière appropriée sur le carter soit directement au niveau des extrémités du carter soit dans des trous aménagés dans une plaque support rapportée et fixée au niveau des extrémités du carter. Les colonnes poreuses **3** sont ainsi positionnées à l'intérieur du carter **12** qui se trouve fermé par les plaques **7, 8** et les joints d'étanchéité **14** associés éventuellement à des plaques support. Le carter **12** délimite ainsi avec la paroi extérieure **3a** des colonnes poreuses **3** et les faces internes **7₁, 8₁** des plaques, l'espace périphérique **4** de récupération du filtrat. Le filtrat ainsi confiné dans le carter **12** est évacué par tous moyens appropriés, à partir d'une sortie **15** aménagée sur le carter **12.**

Dans l'exemple illustré aux **Fig. 3** et **3A****,** le dispositif de séparation **11** comporte un unique élément de séparation **1** comportant un nombre de colonnes poreuses **3** choisies pour obtenir la surface filtrante souhaitée. Bien entendu, le dispositif de séparation **11** peut comporter plusieurs éléments de séparation **1** conformes à l'invention. Dans ce cas, chaque élément de séparation **1** est monté de manière étanche dans le carter **12** à l'aide des plaques **7, 8** pourvues de joints d'étanchéité **14.**

Comme cela ressort de la description qui précède, le milieu fluide entre et sort respectivement des plaques d'entrée **7** et de sortie **8** de la structure monobloc **2,** par des ouvertures séparées formant la structure ouverte **5** qui dans l'exemple illustré à la **Fig. 1****,** comporte trois canaux.

La couche séparatrice de filtration **C** qui recouvre les parois de chaque canal **5** assure la filtration du milieu fluide à traiter. Les couches séparatrices de filtration **C,** par définition, se doivent d'avoir un diamètre moyen de pores inférieur à celui des colonnes poreuses **2.** Les couches séparatrices délimitent la surface de l'élément de séparation par flux tangentiel destinée à être en contact avec le fluide à traiter et sur laquelle va circuler le fluide à traiter.

Un élément de séparation par flux tangentiel de l'état de l'art antérieur présente généralement une longueur de 1 mètre à 1,5 mètre. La section d'un élément de séparation par flux tangentiel présente le plus souvent une surface de 0,8 cm² à 14 cm².

Dans le cadre de la présente invention les éléments de séparation à structure colonnaire monobloc peuvent présenter une longueur de quelques centimètres à plusieurs mètres, de préférence comprise entre 5 cm et 5 m.

La section d'un élément de séparation à structure colonnaire monobloc dépendant du nombre de colonnes et de la distance entre ces colonnes, peut varier de quelques centimètres à plusieurs mètres.

Les épaisseurs des couches séparatrices de filtration varient typiquement entre 1 et 100 µm d'épaisseur.

Bien entendu, dans le cadre de la présente invention, pour assurer sa fonction de séparation, et servir de couche active, les couches séparatrices présentent un diamètre moyen de pores inférieur au diamètre moyen de pores de la colonne poreuse. Le plus souvent, le diamètre moyen de pores des couches séparatrices de filtration est au moins inférieur d'un facteur **3,** et de préférence, d'au moins un facteur **5** par rapport à celui de la colonne poreuse.

Les notions de couches séparatrices de microfiltration, ultrafiltration et nanofiltration sont bien connues de l'homme de l'art. Il est généralement admis que :
- les couches séparatrices de microfiltration présentent un diamètre moyen de pores compris entre 0,1 et 2 µm ;
- les couches séparatrices d'ultrafiltration présentent un diamètre moyen de pores compris entre 0,01 et 0,1 µnn ;
- les couches séparatrices de nanofiltration présentent un diamètre moyen de pores compris entre 0,5 et 10 nm.

Il est possible que cette couche de micro ou d'ultrafiltration soit déposée directement sur la colonne poreuse (cas d'une couche de séparation monocouche), ou encore sur une couche intermédiaire de diamètre moyen de pores moindre, elle-même déposée directement sur la colonne poreuse. La couche de séparation peut, par exemple, être à base de, ou constituée exclusivement, d'un ou plusieurs oxydes métalliques, carbure ou nitrure ou autres céramiques. En particulier, la couche de séparation sera à base de, ou constituée exclusivement de TiO₂, Al₂O₃ et ZrO₂, seul ou en mélange.

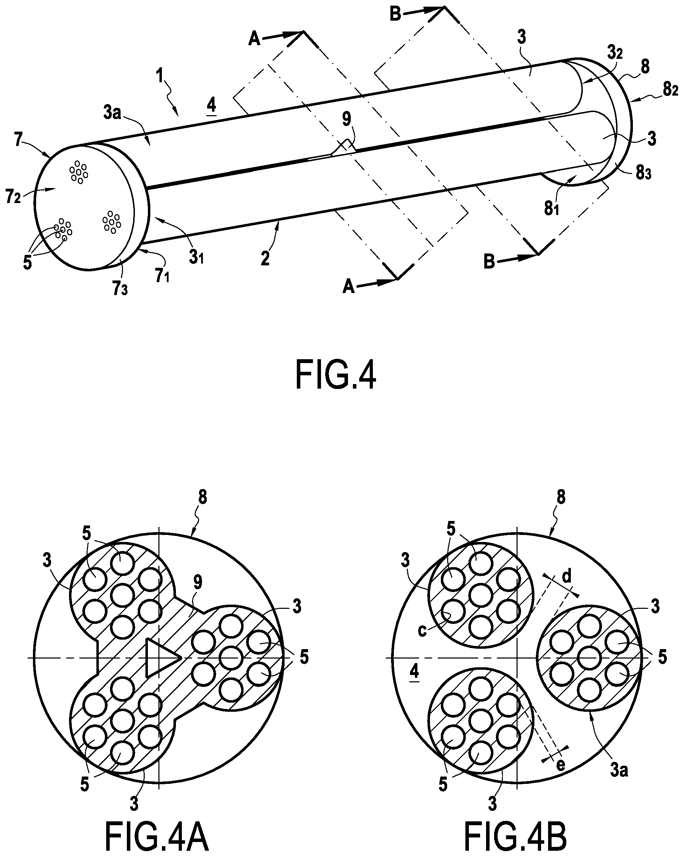

Dans l'exemple illustré à la **Fig. 1****,** chaque colonne poreuse **3** possède avantageusement un seul canal. Bien entendu, il peut être envisagé de réaliser plusieurs canaux dans chaque colonne poreuse. Dans le cas où le support poreux comporte plusieurs canaux, il peut être prévu d'aménager les canaux **5** pour créer au sein de chaque colonne poreuse, au moins deux circuits de circulation pour le milieu fluide, non interconnectés entre eux, entre les côtés entrée et sortie de la colonne poreuse. Selon cet exemple de réalisation, chaque canal **3** s'étend de l'entrée à la sortie de la colonne poreuse sans être connecté à un autre canal. Les **Fig. 4, 4A** et **4B** illustrent un tel exemple de réalisation dans lequel chaque colonne poreuse **3** possède sept canaux **5** aménagés indépendamment les uns des autres dans la plaque d'entrée **7** jusqu'à la plaque de sortie **8.** Bien entendu, le nombre de canaux par colonne poreuse peut être différent de l'exemple illustré.

Un avantage de l'objet de l'invention est de permettre d'améliorer la compacité des éléments de séparation lorsqu'ils sont montés dans un carter.

Le tableau 1 ci-dessous donne les compacités en m²/m³ pour différentes membranes de séparation montées dans un carter cylindrique DN 200 de 213 mm de diamètre intérieur. Comme indiqué dans ce tableau, les membranes de séparation possèdent des sections soit circulaires soit hexagonales, présentant un nombre déterminé de canaux **5** de section circulaire ou de section non circulaire, et un diamètre hydraulique **Dh.**

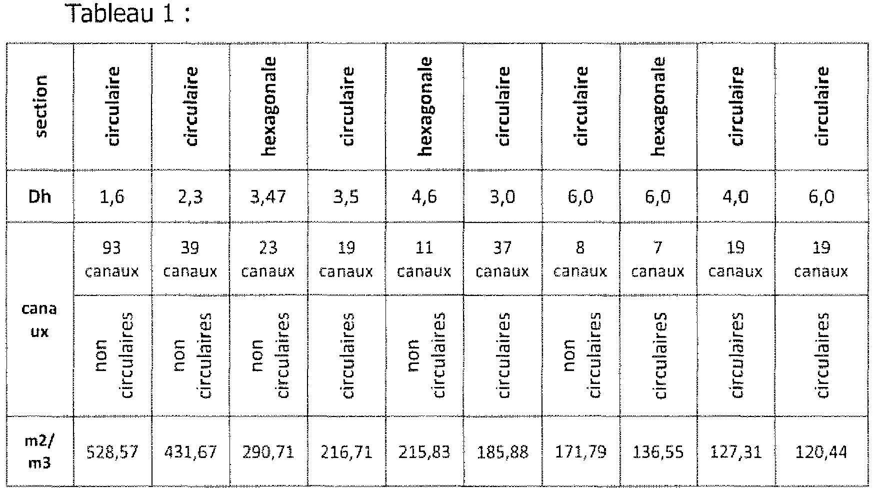

La **Fig, 7A** illustre les compacités en m²/m³ obtenues pour des éléments de séparation **1** conformes à l'invention comportant des colonnes poreuses de section circulaire avec un seul canal central toutes identiques de diamètre extérieur de 10 mm et une épaisseur **e** égale à 2 mm, le canal intérieur circulaire ayant alors un diamètre hydraulique **Dh** = 6 mm, montées dans des carters DN100 et DN200 définis par leurs diamètres intérieurs, chaque structure rigide **2,** agencée selon la description de l'invention, se terminant par des plaques d'extrémité **7** et **8** reliées au carter par l'intermédiaire d'un seul joint d'étanchéité. Ces valeurs de compacité sont en fonction de la distance **d** (en abscisse et en mm), reportées par valeurs décroissantes.

La distance maximum **d** entre les colonnes de 2 mm correspond à la distance qui, dans l'art antérieur, sépare les éléments de filtration de diamètre extérieur 10 mm quand ils sont installés dans de tels carters industriels.

Quand cette distance décroit, ce qu'un élément de séparation objet de la présente invention permet de faire, la compacité des carters augmente.

**Tableau 2 :**

| Dh = 6 mm | Diamètre intérieur du carter | |
|---|---|---|
| | DN100 | DN200 |
| d | 110 mm | 213 mm |
| 2mm | 125 m²/m³ | 139 m²/m³ |
| 0,5 mm | 165 m²/m³ | 181 m²/m³ |
| Gain en compacité | + 32% | + 30% |

Cet exemple illustre le cas de colonnes poreuses et de canaux de sections circulaires mais l'invention peut être appliquée à des colonnes de section non circulaire et à des canaux de section non circulaire.

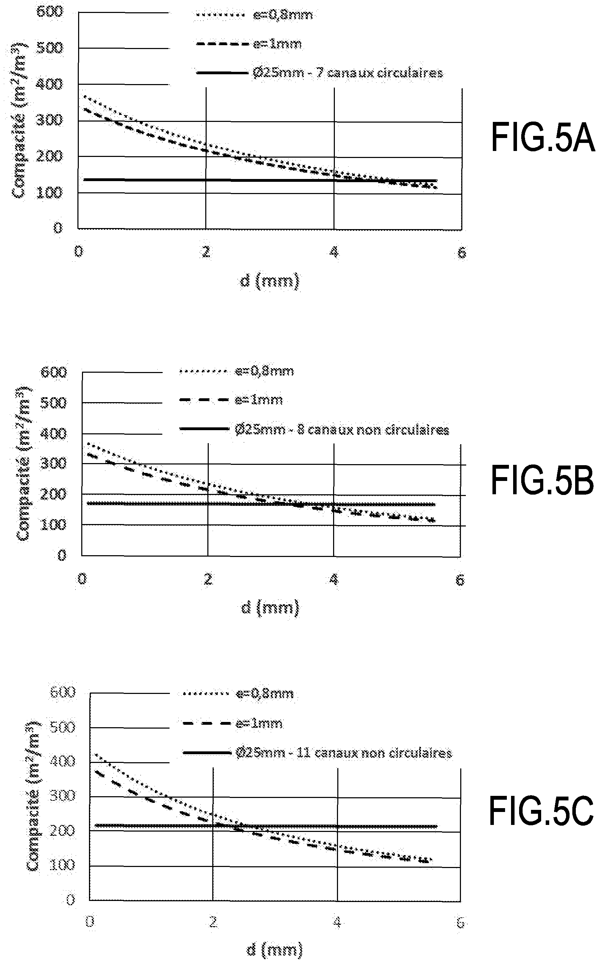

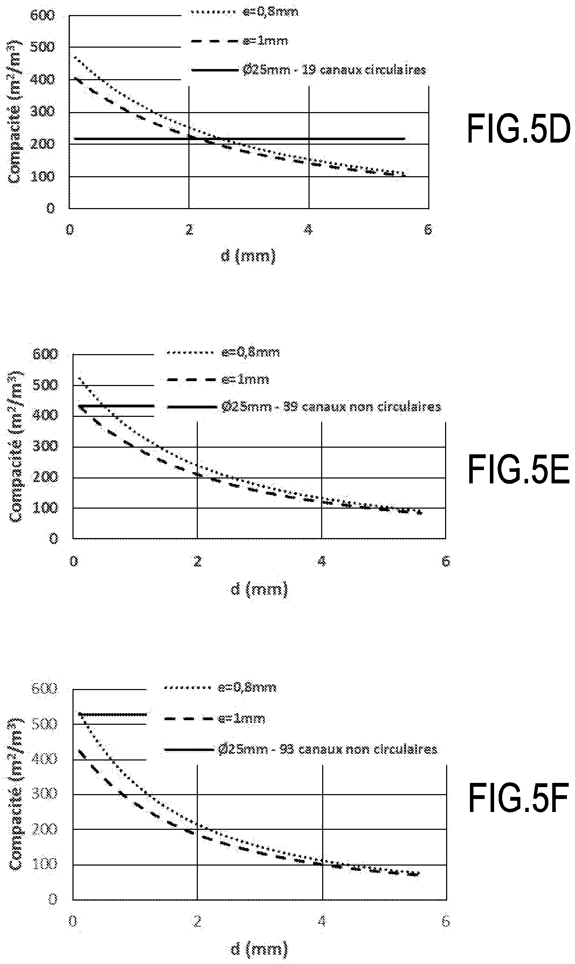

Les **Fig. 5A** à **5F** sont des graphes donnant, pour différents diamètres hydrauliques **Dh,** les compacités (en ordonnée et en m²/m³) obtenues avec les éléments de séparation **1** conformes à l'invention montés dans un carter DN200, en fonction de la distance **d** (en abscisse et en mm) entre les colonnes poreuses **3** dont chacune comporte un seul canal de diamètre hydraulique **Dh**, pour deux valeurs de l'épaisseur **e** (**e**=0,8mm et **e**=1mm). Ces compacités sont comparées à la compacité de référence (ligne horizontale) d'une configuration industrielle de l'art antérieur composée de membranes multicanaux de diamètre extérieur 25mm, avec un diamètre hydraulique équivalent.

Quand les colonnes poreuses possèdent un seul canal, comparées aux configurations industrielles de l'art antérieur utilisant des membranes circulaires de diamètre extérieur 25mm à multicanaux et à diamètres hydrauliques équivalents, les éléments de séparation selon l'invention permettent, selon la valeur de la distance **d** entre les colonnes poreuses **3,** des compacités supérieures jusqu'à une certaine valeur limite du diamètre hydraulique **Dh** proche de 2,3mm.

Le tableau 3 ci-dessous donne les compacités en m²/m³ pour des éléments de séparation **1** conformes à l'invention montés dans un carter DN200 de 213mm de diamètre intérieur avec **e**=0,9mm et **d**=0,5mm et cinq diamètres hydrauliques différents. Les compacités sont comparées avec celles obtenues avec des configurations industrielles de l'art antérieur.

**Tableau 3 :**

| **Dh** | **1,6** | **2,3** | **3,5** | **4,6** | **6** | **6** |
|---|---|---|---|---|---|---|
| **Configuration industrielle de l'art antérieur** | 93 cx | 39 cx | 23 cx | 11 cx | 8 cx | 7 cx |
| | 528 | 431 | 216 | 216 | 172 | 136 |
| **e=0,9mm d=0,5mm** | Colonnes avec un seul canal | | | | | |
| | 382 | 394 | 377 | 350 | 316 | 316 |
| **gain %** | -27,7 | -8,7 | 74,0 | 62,2 | 83,9 | 131,4 |

Pour un diamètre hydraulique **Dh**=2,3mm et en deçà, les configurations industrielles de l'art antérieur donnent des compacités qui restent supérieures aux éléments de séparation objet de l'invention.

On explique ce comportement de par le fait que l'épaisseur des colonnes ne peut être exagérément diminuée (on considère ici l'épaisseur minimum comme raisonnablement comprise entre 0,8 et 1mm).

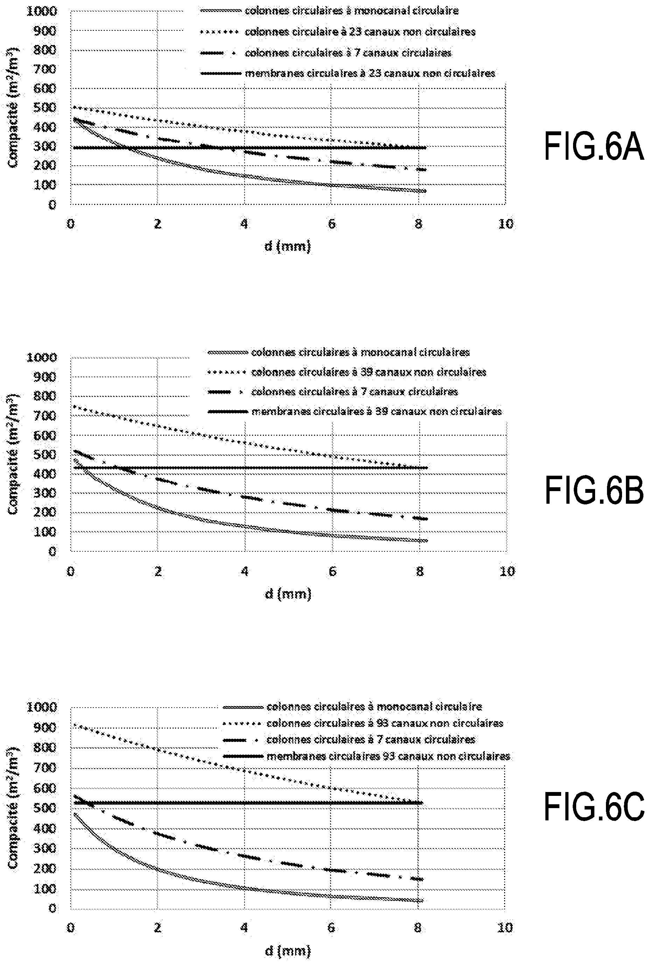

Les **Fig. 6A** à **6C** illustrent les compacités (en ordonnée et en m²/m³) obtenues avec les éléments de séparation **1** conformes à l'invention montés dans un carter DN200 en fonction de la distance **d** (en abscisse et en mm) reportée par valeurs croissantes, entre les colonnes poreuses **3** pourvues d'un seul canal ou de plusieurs canaux en comparaison avec une configuration industrielle de l'art antérieur de diamètre hydraulique équivalent prise comme référence (ligne horizontale).

La **Fig. 6A** permet de comparer un élément de séparation conforme à l'invention pour lequel les colonnes poreuses **3** sont pourvues d'un seul canal circulaire de diamètre hydraulique 3,47mm (**e**=0,9mm) avec d'une part un élément de séparation conforme à l'invention pour lequel chacune des colonnes poreuses **3** est pourvue de sept canaux circulaires de diamètre hydraulique **Dh**=3,47mm et avec d'autre part un élément de séparation conforme à l'invention pour lequel chacune des colonnes poreuses est pourvue de vingt-trois canaux non circulaires de diamètre hydraulique **Dh**=3,47mm.

Il ressort du graphe de la **Fig. 6A** que la compacité obtenue par l'élément de séparation **1** selon l'invention rejoint la compacité de la configuration industrielle de l'art antérieur pour un écartement **d** entre les colonnes poreuses **3** de l'ordre de 8,1mm. Ainsi, pour un élément de séparation dont les colonnes poreuses sont espacées d'une distance **d** égale à 0,5mm, le gain de compacité obtenu est de 67%.

La **Fig. 6B** permet de comparer un élément de séparation conforme à l'invention pour lequel les colonnes poreuses **3** sont pourvues d'un seul canal circulaire de diamètre hydraulique 2,3mm (**e**=0,9mm) avec d'une part un élément de séparation conforme à l'invention pour lequel chacune des colonnes poreuses **3** est pourvue de sept canaux circulaires de diamètre hydraulique **Dh**=2,3mm et avec d'autre part un élément de séparation conforme à l'invention pour lequel chacune des colonnes poreuses est pourvue de trente-neuf canaux non circulaires de diamètre hydraulique **Dh**=2,3mm.

Il ressort du graphe de la **Fig. 6B** que la compacité obtenue par l'élément de séparation **1** selon l'invention rejoint la compacité de la configuration industrielle de l'art antérieur pour un écartement entre les colonnes poreuses **3** de l'ordre de 8,1 mm. Ainsi, pour un élément de séparation dont les colonnes poreuses sont espacées d'une distance **d** égale à 0,5 mm, le gain de compacité obtenu est de 67%.

La **Fig. 6C** permet de comparer un élément de séparation conforme à l'invention pour lequel les colonnes poreuses **3** sont pourvues d'un seul canal circulaire de diamètre hydraulique 1,6mm (**e**=0,9mm) avec d'une part un élément de séparation conforme à l'invention pour lequel chacune des colonnes est pourvue de sept canaux circulaires de diamètre hydraulique **Dh=** 1,6mm et avec d'autre part un élément de séparation conforme à l'invention pour lequel chacune des colonnes est pourvue de quatre-vingt-treize canaux non circulaires de diamètre hydraulique **Dh**=1,6mm.

Il ressort du graphe de la **Fig. 6C** que la compacité obtenue par l'élément de séparation **1** selon l'invention rejoint la compacité de la configuration industrielle de l'art antérieur pour un écartement entre les colonnes poreuses **3** de l'ordre de 8,1mm. Ainsi, pour un élément de séparation dont les colonnes poreuses sont espacées d'une distance **d** égale à 0,5mm, le gain de compacité obtenu est de 67%.

D'une manière générale, quand les colonnes poreuses possèdent plusieurs canaux, comparées aux configurations industrielles de l'art antérieur utilisant des membranes circulaires à multicanaux et à diamètres hydrauliques équivalents, les éléments de séparation selon l'invention permettent des compacités toujours supérieures dès lors que la distance **d** est inférieure à 8,1mm.

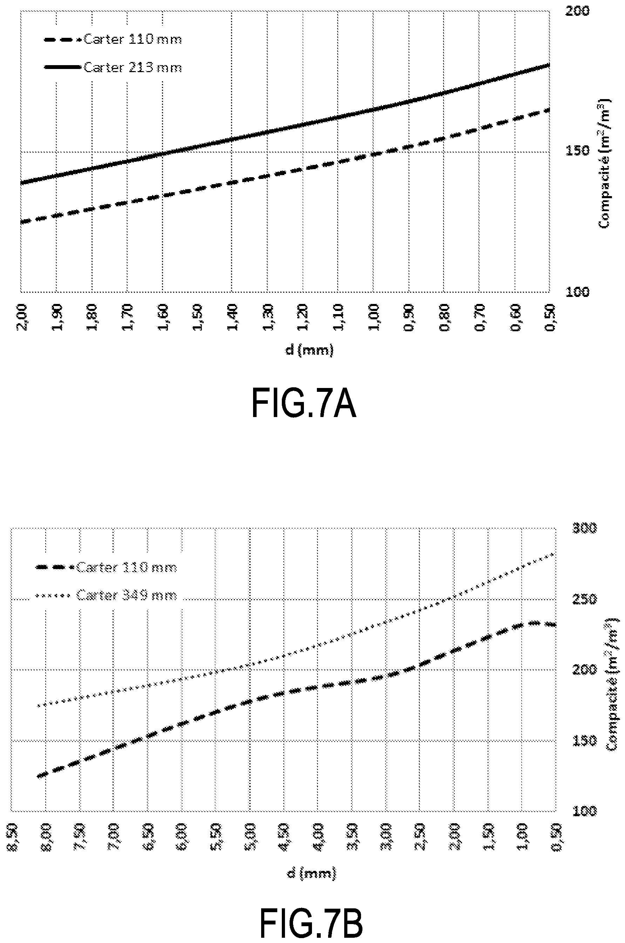

La **Fig. 7B** donne les compacités en m²/m³ pour des éléments de séparation à structures colonnaires objet de la présente invention comportant des colonnes poreuses à plusieurs canaux, toutes identiques de diamètre extérieur 25mm, avec sept canaux intérieurs de diamètre hydraulique **Dh** = 6mm montées dans des carters DN100 et DN350 définis par leurs diamètres intérieurs, chaque structure rigide **2,** agencée selon la description de l'invention, se terminant par des plaques d'extrémité, ces dernières étant reliées au carter par l'intermédiaire d'un seul joint d'étanchéité.

La distance maximum **d** entre les colonnes poreuses de 8,1mm correspond à la distance qui, dans l'art antérieur, sépare les éléments de filtration de diamètre extérieur 25mm quand ils sont installés dans de tels carters industriels.

Quand cette distance décroit, ce qu'un élément de séparation objet de la présente invention permet de faire, la compacité des carters augmente.

**Tableau 4 :**

| **Dh = 6 mm** | Diamètre intérieur du carter | |
|---|---|---|
| | DN100 | DN350 |
| **D** | 110 mm | 349 mm |
| 8,1 mm | 125 m²/m³ | 175 m²/m³ |
| 0,5 mm | 232 m²/m³ | 283 m²/m³ |
| Gain en compacité | + 85% | + 62% |

Cet exemple illustre le cas de colonnes poreuses et de canaux de sections circulaires mais l'invention peut être appliquée à des colonnes de section non circulaire et à des canaux de section non circulaire.

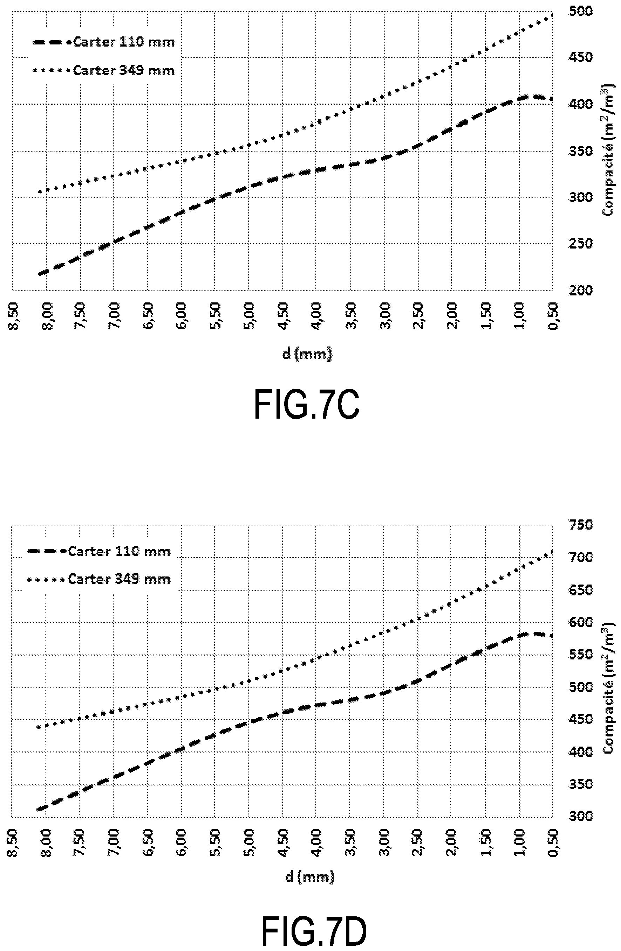

La **Fig. 7C** donne les compacités en m²/m³ pour des éléments de séparation à structures colonnaires objet de la présente invention comportant des colonnes poreuses à section circulaire possédant plusieurs canaux de section non circulaire, toutes identiques de diamètre extérieur 25mm, avec 23 canaux intérieurs de diamètre hydraulique **Dh** = 3,5mm montées dans des carters DN100 et DN350 définis par leurs diamètres intérieurs, chaque structure rigide, agencée selon la description de l'invention, se terminant par des plaques d'extrémité, ces dernières étant reliées au carter par l'intermédiaire d'un seul joint d'étanchéité.

La distance maximum **d** entre les colonnes poreuses de 8,1mm correspond à la distance qui, dans l'art antérieur, sépare les éléments de filtration de diamètre extérieur 25mm quand ils sont installés dans de tels carters industriels.

Quand cette distance décroit, ce qu'un élément de séparation objet de la présente invention permet de faire, la compacité des carters augmente.

**Tableau 5 :**

| **Dh = 3,5 mm** | Diamètre intérieur du carter | |
|---|---|---|
| | DN100 | DN350 |
| **d** | 110 mm | 349 mm |
| 8,1 mm | 218 m²/m³ | 307 m²/m³ |
| 0,5 mm | 406 m²/m³ | 496 m²/m³ |
| Gain en compacité | + 86% | + 62% |

Cet exemple illustre le cas de colonnes de section circulaire mais l'invention peut être appliquée à des colonnes de section non circulaire.

La **Fig. 7D** donne les compacités en m²/m³ pour des éléments de séparation à structures colonnaires objet de la présente invention comportant des colonnes poreuses à section circulaire possédant plusieurs canaux de section non circulaire, toutes identiques de diamètre extérieur 25mm, avec trente-neuf canaux intérieurs de diamètre hydraulique **Dh** = 2,5mm montées dans des carters DN100 et DN350 définis par leurs diamètres intérieurs, chaque structure rigide, agencée selon la description de l'invention, se terminant par des plaques d'extrémité, ces dernières étant reliées au carter par l'intermédiaire d'un seul joint d'étanchéité.

La distance maximum **d** entre les colonnes poreuses de 8,1mm correspond à la distance qui, dans l'art antérieur, sépare les éléments de filtration de diamètre extérieur 25mm quand ils sont installés dans de tels carters industriels.

Quand cette distance décroit, ce qu'un élément de séparation objet de la présente invention permet de faire, la compacité des carters augmente.

**Tableau 6 :**

| **Dh = 2,5 mm** | Diamètre intérieur du carter | |
|---|---|---|
| | DN100 | DN350 |
| **D** | 110 mm | 349 mm |
| 8,1 mm | 312 m²/m³ | 439 m²/m³ |
| 0,5 mm | 580 m²/m³ | 709 m²/m³ |
| Gain en compacité | + 86% | + 62% |

Cet exemple illustre le cas de colonnes de section circulaire mais l'invention peut être appliquée à des colonnes de section non circulaire.

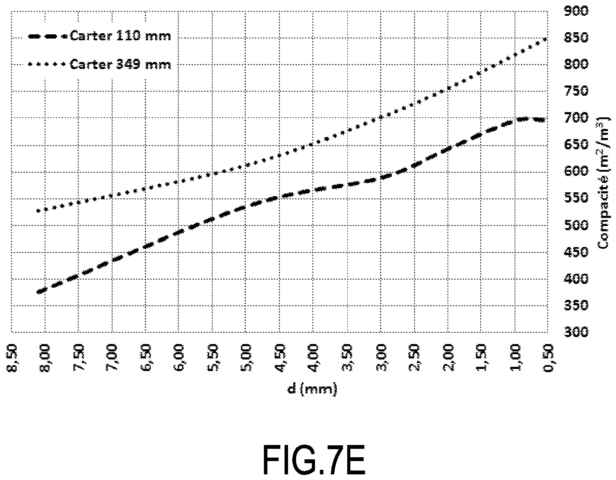

La **Fig. 7E** donne les compacités en m²/m³ pour des éléments de séparation à structures colonnaires objet de la présente invention comportant des colonnes poreuses à section circulaire possédant plusieurs canaux de section non circulaire, toutes identiques de diamètre extérieur 25mm, avec quatre-vingt-treize canaux intérieurs de diamètre hydraulique **Dh** = 1,6mm montées dans des carters DN100 et DN350 définis par leurs diamètres intérieurs, chaque structure rigide, agencée selon la description de l'invention, se terminant par des plaques d'extrémité, ces dernières étant reliées au carter par l'intermédiaire d'un seul joint d'étanchéité.

La distance maximum **d** entre les colonnes poreuses de 8,1mm correspond à la distance qui, dans l'art antérieur, sépare les éléments de filtration de diamètre extérieur 25mm quand ils sont installés dans de tels carters industriels.

Quand cette distance décroit, ce qu'un élément de séparation objet de la présente invention permet de faire, la compacité des carters augmente.

**Tableau 7 :**

| **Dh = 1,6 mm** | Diamètre intérieur du carter | |
|---|---|---|
| | DN100 | DN350 |
| **D** | 110 mm | 349 mm |
| 8,1 mm | 375 m²/m³ | 527 m²/m³ |
| 0,5 mm | 696 m²/m³ | 851 m²/m³ |
| Gain en compacité | + 86% | + 61% |

Cet exemple illustre le cas de colonnes de section circulaire mais l'invention peut être appliquée à des colonnes de section non circulaire.

Le tableau 8 ci-dessous donne les compacités en m²/m³ pour des éléments de séparation **1** conformes à l'invention montés dans un carter DN 200 de 213mm de diamètre intérieur avec **e**=0,9mm et **d**=0,5mm et cinq diamètres hydrauliques différents.

**Tableau 8 :**

| Dh | **1,6** | **2,3** | **3,47** | **4,6** | **6** | **6** | **6** |
|---|---|---|---|---|---|---|---|
| **Configuration industrielle de l'art antérieur** | 93 cx | 39 cx | 23 cx | 11 cx | 8 cx | 7 cx | 19 cx |
| | 528 | 431 | 290 | 216 | 172 | 136 | 120 |
| **e=0,9mm d=0,5mm** | Colonnes avec plusieurs canaux | | | Colonnes avec un seul canal | | | |
| | 93 cx | 39 cx | 23 cx | 1 canal | 1 canal | 1 canal | 1 canal |
| | 887 | 724 | 488 | 350 | 316 | 316 | 316 |
| **gain %** | **67** | **67** | **67** | **62,2** | **83,9** | **131,4** | **162,4** |

Selon les exemples préférés de réalisation selon lesquels chaque colonne poreuse **3** comporte un ou plusieurs canaux **5,** l'épaisseur **e** du matériau poreux est comprise de préférence entre 0,250 et 2,500mm et la distance **d** entre les colonnes poreuses **3** est comprise de préférence entre 0,250 et 5,000mm.

Un autre avantage de l'invention concerne la simplification pour le montage d'un tel élément de séparation **1** conforme à l'invention, dans un module de séparation **11** réalisé de toute manière connue. En effet, la présence des plaques d'entrée et de sortie qui assurent l'assemblage de plusieurs colonnes poreuses permet de faciliter l'étanchéité à réaliser avec le carter et en particulier de limiter le nombre de joints d'étanchéité à utiliser par rapport aux solutions connues.

Tel que cela ressort plus précisément de la **Fig. 3****,** un tel élément de séparation **1** est monté aux extrémités du carter **12** à l'aide des plaques **7, 8.** A cet effet, un joint d'étanchéité **14** est monté sur le pourtour **7₃, 8₃** des plaques **7, 8.** Ces deux joints d'étanchéité **14** sont montés par tous moyens appropriés aux extrémités du carter pour permettre de fermer l'espace périphérique **4** de récupération du filtrat qui est évacué du carter par une sortie **15** ou par tous moyens appropriés connus.

Dans l'exemple illustré à la **Fig. 3****,** le dispositif de séparation **11** comporte un unique élément de séparation **1** comportant un nombre de colonnes poreuses **3** choisies pour obtenir la surface filtrante souhaitée. Bien entendu, le dispositif de séparation **11** peut comporter plusieurs éléments de séparation **1** conformes à l'invention. Dans ce cas, chaque élément de séparation **1** est monté de manière étanche dans le carter **12** à l'aide des plaques **7, 8** pourvues de joints d'étanchéité **14.**

Ainsi, selon l'invention, il n'est plus nécessaire d'utiliser des joints individuels ou uniques qui soient spécifiques aux éléments de filtration, et il peut ainsi être avantageux d'utiliser des joints non spécifiques (toriques, carrés, à lèvres....) provenant des catalogues des fabricants de joints qui permettent de réaliser l'étanchéité requise entre la chambre de collecte du perméat et les chambres amont et aval du module.

Selon une variante préférée de l'invention, les colonnes poreuses **3** présentent toutes des formes identiques. Dans l'exemple illustré sur les figures, toutes les colonnes poreuses **3** présentent une forme cylindrique de section circulaire. Bien entendu, il peut être prévu que les colonnes poreuses **3** présentent des formes différentes entre elles.

Selon une variante préférée de l'invention, les colonnes poreuses **3** sont de forme cylindrique. La section des colonnes poreuses **3** peut être circulaire ou autre.

Selon une variante préférée de l'invention, les colonnes poreuses **3** possèdent des dimensions transversales identiques. En d'autres termes, l'épaisseur **e** des colonnes poreuses **3** est identique pour l'ensemble des colonnes poreuses **3.** Bien entendu, il peut être prévu que les colonnes poreuses **3** présentent des dimensions transversales différentes.

Selon une caractéristique avantageuse de réalisation, les colonnes rigides **3** possèdent des formes extérieures qui sont constantes ou variables suivant leur longueur c'est-à-dire entre les plaques **7, 8.** Ces colonnes rigides **3** possèdent en combinaison ou non avec la caractéristique de forme ci-dessus, des dimensions transversales qui sont constantes ou variables suivant leur longueur.

Selon l'exemple illustré à la **Fig. 1****,** les colonnes poreuses **3** s'étendent de façon rectiligne en étant positionnées parallèlement les unes aux autres. Il est à noter que les colonnes poreuses **3** peuvent s'étendre de manière hélicoïdale comme illustré à la **Fig. 2**, permettant de créer pour le fluide à traiter, un écoulement tournant. Selon cette variante de réalisation, chaque colonne poreuse est construite par la rotation d'une section circulaire ou autre autour d'un axe central, cette section génératrice restant soit perpendiculaire à l'hélice centrale (serpentin), soit horizontale (colonne torse) ou soit verticale c'est-à-dire parallèle à l'axe central (vis de Saint-Gilles).

Selon une autre variante de réalisation, les colonnes poreuses **3** sont entrecroisées comme illustré à la **Fig. 2****.**

L'invention n'est pas limitée aux exemples décrits et représentés car diverses modifications peuvent y être apportées sans sortir de son cadre.

## Revendications

1. Élément de séparation pour obtenir une séparation moléculaire et/ou particulaire d'un milieu fluide à traiter en un filtrat et un rétentat, cet élément comportant une plaque d'entrée (**7**) et une plaque de sortie (**8**) supportant entre-elles au moins deux colonnes rigides poreuses (**3**) réalisées en un même matériau, positionnées l'une à côté de l'autre pour délimiter à l'extérieur de leurs parois extérieures, un volume (**4**) de récupération du filtrat, chaque colonne (**3**) comportant intérieurement au moins une structure ouverte (**5**) pour la circulation du milieu fluide, débouchant à l'une des extrémités de cette colonne poreuse pour l'entrée du milieu fluide à traiter et à l'autre extrémité pour la sortie du rétentat, **caractérisée en ce que** l'élément est une structure rigide (**2**) monobloc faite d'une seule pièce, homogène et continue dans tout son ensemble sans soudure ni apports exogènes.

2. Elément selon la revendication 1, **caractérisé en ce que** les colonnes rigides poreuses (**3**) possèdent des formes extérieures qui sont constantes ou variables entre les plaques (**7,8**).

3. Elément selon les revendications 1 ou 2, **caractérisé en ce que** les colonnes rigides poreuses (**3**) possèdent des dimensions transversales qui sont constantes ou variables entre les plaques (**7,8**).

4. Élément selon l'une des revendications 1 ou 2, **caractérisé en ce que** chaque plaque (**7, 8**) comporte une face externe **(7₂, 8₂)** en contact avec le milieu fluide à traiter ou avec le rétentat, qui est rendue étanche.

5. Élément selon l'une des revendications 1 à 3, **caractérisé en ce que** les plaques (**7, 8**) possèdent une section droite circulaire.

6. Élément selon l'une des revendications 1 à 3, **caractérisé en ce que** les plaques **(7, 8)** possèdent une section droite non circulaire.

7. Élément selon l'une des revendications 1 à 4, **caractérisé en ce que** les colonnes poreuses (**3**) sont solidarisées entre elles à l'aide d'au moins un pont de liaison (**9**), réalisé avec le même matériau que les plaques et les colonnes.

8. Élément selon l'une des revendications 1 à 5, **caractérisé en ce que** les colonnes poreuses (**3**) sont de formes différentes ou identiques.

9. Elément selon l'une des revendications 1 à 6, **caractérisé en ce que** les colonnes poreuses (**3**) possèdent des dimensions transversales identiques ou différentes.

10. Élément selon l'une des revendications 1 à 9, **caractérisé en ce que** les colonnes poreuses (**3**) sont de forme cylindrique.

11. Élément selon l'une des revendications 1 à 8, **caractérisé en ce que** les colonnes poreuses (**3**) sont de forme hélicoïdale.

12. Élément selon l'une des revendications 1 à 11, **caractérisé en ce que** les colonnes poreuses (**3**) sont entrecroisées.

13. Élément selon l'une des revendications 1 à 12, **caractérisé en ce que** les colonnes poreuses (**3**) possèdent intérieurement des structures ouvertes (**5**) pour la circulation du milieu fluide, identiques pour l'ensemble des colonnes poreuses (**3**) ou différentes pour au moins une des colonnes poreuses.

14. Élément selon l'une des revendications 1 à 13, **caractérisé en ce que** chaque colonne poreuse (**3**) comporte en tant que structure ouverte, un unique canal (**5**).

15. Élément selon la revendication 14, **caractérisé en ce que** les canaux (**5**) des colonnes poreuses (**3**) délimitent pour chaque colonne poreuse, une épaisseur constante (**e**) de matériau poreux compris entre 0,25 et 5mm tandis que la distance (**d**) entre les colonnes poreuses (**3**) est comprise entre 0,125 et 10mm.

16. Élément selon l'une des revendications 1 à 13, **caractérisé en ce que** chaque colonne poreuse (**3**) comporte en tant que structure ouverte, des canaux (**5**) comportant tous une paroi périphérique en regard de la paroi extérieure de la colonne poreuse.

17. Élément selon l'une des revendications 1 à 16, **caractérisé en ce qu'**il comporte au moins une couche séparatrice (**C**) pour le milieu fluide continument déposée sur la surface de la structure ouverte (**5**) en contact avec le milieu fluide.

18. Élément selon l'une des revendications 1 à 17, **caractérisé en ce que** les colonnes poreuses (**3**) et les plaques (**7, 8**) sont réalisées en un matériau organique.

19. Élément selon l'une des revendications 1 à 18, **caractérisé en ce que** les colonnes poreuses (**3**) et les plaques (**7, 8**) sont constituées d'une céramique choisie parmi les oxydes, les nitrures, les carbures ou d'autres matériaux céramiques et leur mélanges, et, en particulier, parmi l'oxyde de titane, l'alumine, la zircone et leur mélange, le nitrure de titane, le nitrure d'aluminium, le nitrure de bore, et le carbure de silicium éventuellement en mélange avec un autre matériau céramique.

20. Élément selon l'une des revendications 1 à 17, **caractérisé en ce que** les colonnes poreuses (**3**) et les plaques (**7, 8**) sont réalisées en un matériau inorganique non métallique.

21. Élément selon l'une des revendications 1 à 17, **caractérisé en ce que** les colonnes poreuses (**3**) et les plaques **(7, 8)** sont réalisées en un métal pur tel que l'aluminium, le zinc, le cuivre, le titane ou sous forme d'un alliage de plusieurs de ces métaux ou d'acier inoxydable.

22. Module de séparation pour obtenir une séparation moléculaire et/ou particulaire d'un milieu fluide à traiter en un filtrat et un rétentat, le dispositif comportant dans un carter (**12**), au moins un élément monobloc (**1**) conforme à l'une des revendications 1 à 21 dont chaque plaque (**7, 8**) est montée dans un joint d'étanchéité (**14**) et dont au moins deux colonnes rigides poreuses (**3**) positionnées l'une à côté de l'autre délimitent par leur paroi extérieure (**3a**), les faces internes des plaques (**8, 9**) et le carter, un espace périphérique (**4**) de récupération du filtrat.

## Patentansprüche

1. Trennungselement zum Erhalten einer Molekül- und/oder Partikeltrennung eines zu behandelnden Flüssigmediums in ein Filtrat und ein Retentat, wobei das Element eine Eingangsplatte (7) und eine Ausgangsplatte (8) umfasst, die dazwischen mindestens zwei starre, poröse Säulen (3) stützen, die aus dem gleichen Material umgesetzt werden und nebeneinander positioniert sind, um außerhalb ihrer Außenwände ein Volumen (4) zur Rückgewinnung von Filtrat zu begrenzen, wobei jede Säule (3) innen mindestens eine offene Struktur (5) für die Zirkulation des Flüssigmediums umfasst, die in eines der Enden der porösen Säule für den Eintritt des zu behandelnden Flüssigmediums und in das andere Ende für den Austritt des Retentats mündet, **dadurch gekennzeichnet, dass** das Element eine starre, einstückige Struktur (2) ist, die aus einem einzigen Teil hergestellt ist, das in seiner Gesamtheit homogen und durchgehend ist und weder Nähte noch exogene Zufuhren aufweist.

2. Element nach Anspruch 1, **dadurch gekennzeichnet, dass** die starren, porösen Säulen (3) äußere Formen besitzen, die zwischen den Platten (7,8) konstant oder variabel sind.

3. Element nach Anspruch 1 oder 2, **dadurch gekennzeichnet, dass** die starren, porösen Säulen (3) Querabmessungen besitzen, die zwischen den Platten (7,8) konstant oder variabel sind.

4. Element nach einem der Ansprüche 1 oder 2, **dadurch gekennzeichnet, dass** jede Platte (7, 8) eine Außenfläche (7₂, 8₂) umfasst, die mit dem zu behandelnden Flüssigmedium oder mit dem Retentat in Kontakt steht, das auf dichte Weise zurückgehalten wird.

5. Element nach einem der Ansprüche 1 bis 3, **dadurch gekennzeichnet, dass** die Platten (7, 8) einen kreisförmigen Querschnitt besitzen.

6. Element nach einem der Ansprüche 1 bis 3, **dadurch gekennzeichnet, dass** die Platten (7, 8) einen nicht kreisförmigen Querschnitt besitzen.

7. Element nach einem der Ansprüche 1 bis 4, **dadurch gekennzeichnet, dass** die porösen Säulen (3) mithilfe von mindestens einer Verbindungsbrücke (9) miteinander fest verbunden sind, die mit dem gleichen Material umgesetzt wird wie die Platten und die Säulen.

8. Element nach einem der Ansprüche 1 bis 5, **dadurch gekennzeichnet, dass** die porösen Säulen (3) unterschiedliche oder identische Formen aufweisen.

9. Element nach einem der Ansprüche 1 bis 6, **dadurch gekennzeichnet, dass** die porösen Säulen (3) identische oder unterschiedliche Querabmessungen besitzen.

10. Element nach einem der Ansprüche 1 bis 9, **dadurch gekennzeichnet, dass** die porösen Säulen (3) eine zylindrische Form aufweisen.

11. Element nach einem der Ansprüche 1 bis 8, **dadurch gekennzeichnet, dass** die porösen Säulen (3) eine schraubenförmige Form aufweisen.

12. Element nach einem der Ansprüche 1 bis 11, **dadurch gekennzeichnet, dass** die porösen Säulen (3) verflochten sind.

13. Element nach einem der Ansprüche 1 bis 12, **dadurch gekennzeichnet, dass** die porösen Säulen (3) innen offene Strukturen (5) für die Zirkulation des Flüssigmediums besitzen, die für die Gesamtheit der porösen Säulen (3) identisch oder für mindestens eine der porösen Säulen unterschiedlich sind.

14. Element nach einem der Ansprüche 1 bis 13, **dadurch gekennzeichnet, dass** jede poröse Säule (3) als offene Struktur einen einzigartigen Kanal (5) umfasst.

15. Element nach Anspruch 14, **dadurch gekennzeichnet, dass** die Kanäle (5) der porösen Säulen (3) für jede poröse Säule eine konstante Dicke (e) von porösem Material begrenzen, die zwischen 0,25 und 5 mm liegt, während der Abstand (d) zwischen den porösen Säulen (3) zwischen 0,125 und 10 mm liegt.

16. Element nach einem der Ansprüche 1 bis 13, **dadurch gekennzeichnet, dass** jede poröse Säule (3) als offene Struktur Kanäle (5) umfasst, die jeweils eine Umfangswand im Hinblick auf die Außenwand der porösen Säule umfassen.

17. Element nach einem der Ansprüche 1 bis 16, **dadurch gekennzeichnet, dass** es mindestens eine Trennschicht (C) für das Flüssigmedium umfasst, die kontinuierlich auf der Oberfläche der offenen Struktur (5) in Kontakt mit dem Flüssigmedium abgelagert wird.

18. Element nach einem der Ansprüche 1 bis 17, **dadurch gekennzeichnet, dass** die porösen Säulen (3) und die Platten (7, 8) aus einem organischen Material umgesetzt werden.

19. Element nach einem der Ansprüche 1 bis 18, **dadurch gekennzeichnet, dass** die porösen Säulen (3) und die Platten (7, 8) aus einer Keramik gebildet sind, ausgewählt aus Oxiden, Nitriden, Carbiden oder anderen Keramikmaterialien und ihren Gemischen, und insbesondere aus Titan-, Aluminium- und Zirkoniumoxid und ihrem Gemisch, Titannitrid, Aluminiumnitrid, Bornitrid, und Siliciumcarbid, gegebenenfalls im Gemisch mit einem anderen Keramikmaterial.

20. Element nach einem der Ansprüche 1 bis 17, **dadurch gekennzeichnet, dass** die porösen Säulen (3) und die Platten (7, 8) aus einem anorganischen, nicht metallischen Material umgesetzt werden.

21. Element nach einem der Ansprüche 1 bis 17, **dadurch gekennzeichnet, dass** die porösen Säulen (3) und die Platten (7, 8) aus einem reinen Metall, wie Aluminium, Zink, Kupfer, Titan oder in Form einer Legierung von mehreren dieser Metalle oder von Edelstahl umgesetzt werden.

22. Trennungsmodul zum Erhalten einer Molekül- und/oder Partikeltrennung eines zu behandelnden Flüssigmediums in ein Filtrat und ein Retentat, wobei die Vorrichtung in einem Gehäuse (12) mindestens ein einstückiges Element (1) nach einem der Ansprüche 1 bis 21 umfasst, wobei jede Platte (7, 8) davon in einem Dichtungsring (14) montiert ist und wobei mindestens zwei starre, poröse Säulen (3) davon, die nebeneinander positioniert sind, durch ihre Außenwand (3a), die Innenflächen der Platten (8, 9) und das Gehäuse, einen Umfangsraum (4) zur Rückgewinnung des Filtrats begrenzen.

## Claims

1. Separator element for obtaining molecular and/or particulate separation of a fluid medium for treatment into a filtrate and a retentate, the element comprising an inlet plate (7) and an outlet plate (8) supporting between them at least two porous rigid columns (3) made of the same material, positioned side by side to define outside their outside walls a volume (4) for recovering the filtrate, each column (3) presenting internally at least one open structure (5) for passing a flow of the fluid medium, opening out in one of the ends of this porous column for inlet of the fluid medium for treatment and in the other end for outlet of the retentate, **characterized in that** the element is a single-piece rigid structure (2) made as a single piece that is uniform and continuous throughout, without any bonds or exogenous additions.

2. Element according to claim 1, **characterized in that** the porous rigid columns (3) possess outside shapes that are constant or that vary between the plates (7,8).

3. Element according to claims 1 or 2, **characterized in that** the porous rigid columns (3) possess transverse dimensions that are constant or that vary between the plates (7,8).

4. Element according to one of claims 1 or 2, **characterized in that** each plate (7, 8) has an outside face (7₂, 8₂) that is sealed and in contact with the fluid medium for treatment or with the retentate.

5. Element according to one of claims 1 to 3, **characterized in that** the plates (7, 8) possess a right section that is circular.

6. Element according to one of claims 1 to 3, **characterized in that** the plates (7, 8) possess a right section that is non-circular.

7. Element according to one of claims 1 to 4, **characterized in that** the porous columns (3) are secured to one another via at least one connection bridge (9) made of the same material as the plates and the columns.

8. Element according to one of claims 1 to 5, **characterized in that** the porous columns (3) are of shapes that are different or identical.

9. Element according to one of claims 1 to 6, **characterized in that** the porous columns (3) possesses transverse dimensions that are identical or different.

10. Element according to one of claims 1 to 9, **characterized in that** the porous columns (3) are cylindrical in shape.

11. Element according to one of claims 1 to 8, **characterized in that** the porous columns (3) are helical in shape.

12. Element according to one of claims 1 to 11, **characterized in that** the porous columns (3) are intertwined together.

13. Element according to one of claims 1 to 12, **characterized in that** the porous columns (3) possess internal open structures (5) for passing a flow of the fluid medium, which structures are identical for all of the porous columns (3) or different for at least one of the porous columns.

14. Element according to one of claims 1 to 13, **characterized in that** each porous column (3) includes a single channel (5) as its open structure.

15. Element according to claim 14, **characterized in that** the channels (5) of the porous columns (3) for each porous column define a constant thickness (e) of porous material lying in the range 0.25 mm to 5 mm, while the distance (d) between the porous columns (3) lies in the range 0.125 mm to 10 mm.

16. Element according to one of claims 1 to 13, **characterized in that** each porous column (3) includes as its open structure channels (5) all having a peripheral wall facing the outside wall of the porous column.

17. Element according to one of claims 1 to 16, **characterized in that** it includes at least one separating layer (C) for the fluid medium that is deposited continuously on the surface of the open structure (5) that comes into contact with the fluid medium.

18. Element according to one of claims 1 to 17, **characterized in that** the porous columns (3) and the plates (7, 8) are made of organic material.

19. Element according to one of claims 1 to 18, **characterized in that** the porous columns (3) and the plates (7, 8) are made of a ceramic selected from oxides, nitrides, carbides, or other ceramic materials, and mixtures thereof, and in particular from titanium oxide, alumina, zirconia, and mixtures thereof, titanium nitride, aluminum nitride, boron nitride, and silicon carbide, possibly mixed with some other ceramic material.

20. Element according to one of claims 1 to 17, **characterized in that** the porous columns (3) and the plates (7, 8) are made of a non-metallic inorganic material.

21. Element according to one of claims 1 to 17, **characterized in that** the porous columns (3) and the plates (7, 8) are made of a pure metal such as aluminum, zinc, copper, or titanium, or in the form of an alloy of a plurality of these metals, or of stainless steel.

22. Separator module for obtaining molecular and/or particulate separation of a fluid medium for treatment into a filtrate and a retentate, the device comprising in a casing (12) at least one single-piece element (1) in accordance with one of claims 1 to 21, having each plate (7, 8) mounted in a sealing gasket (14) and having at least two porous rigid columns (3) positioned side by side defining by their outside walls (3a), the inside faces (8, 9) of the plates, and of the casing, a peripheral space (4) for recovering the filtrate.
